# EUROPEAN PATENT APPLICATION

(11) **EP 2 477 095 A1**
(43) Date of publication of application: **18.07.2012**
(21) Application number: 11150351.2
(22) Date of filing: 07.01.2011
(51) Int. Cl.: G06F 3/038, G06F 3/033, G06F 1/32

(54) **Mouse**

(71) Applicant: Giga-Byte Technology Co., Ltd., Hsin Tien 231, Taipei County (TW)
(72) Inventor: Chen, Shu-I, Taipei County (TW); Ma, Mou-Ming, Taipei County (TW); Lai, Yen-Bo, Taipei County (TW)
(74) Representative: Schwerbrock, Florian

(57) **Abstract**

A mouse, activated by a touch medium, is provided. The mouse includes a mouse body, a sensor, a power source and a mouse circuit. The sensor is disposed on the body, wherein the sensor sends a switch signal according to a distance between the touch medium and the sensor. The mouse circuit is electrically connected to the power source and the sensor, wherein the mouse circuit activates or deactivates the mouse according to the switch signal.

## Description

### BACKGROUND OF THE INVENTION

### Field of the Invention

The present invention relates to a mouse, and in particular relates to a wireless mouse which has decreased power consumption.

### Description of the Related Art

A conventional wireless mouse is automatically deactivated only when the key of the wireless mouse has been not pressed for a long period of time. Thus, a relatively large amount of power is consumed during the long period of time, shortening battery power usage of the wireless mouse. Therefore, a wireless mouse with decreased power consumption is required.

### BRIEF SUMMARY OF THE INVENTION

A mouse activated by a touch medium is provided. The mouse includes a mouse body, a sensor, a power source and a mouse circuit. The sensor is disposed on the body, wherein the sensor sends a switch signal according to a distance between the touch medium and the sensor. The mouse circuit is electrically connected to the power source and the sensor, wherein the mouse circuit activates or deactivates the mouse according to the switch signal.

In one embodiment, the mouse circuit comprises a sensor IC and a microcontroller unit, wherein the sensor IC is electrically connected to the microcontroller unit, a sensor is electrically connected to the sensor IC, and the microcontroller unit is electrically connected to the power source, and the switch signal is received and processed by the sensor IC and then sent to the microcontroller unit, and the microcontroller unit activates or deactivates the mouse according to the switch signal.

In one embodiment, the mouse further comprises a control interface, wherein the mouse body comprises an operation surface, a first end and a second end, and the control interface is located on the operation surface adjacent to the first end, and the sensor is located on the operation surface between the control interface and the second end. The control interface comprises a mouse wheel, and the operation surface has a central line, wherein the sensor and the mouse wheel are located on the central line, a first distance is formed between the sensor and the first end, a second distance is formed between the sensor and the second end, and the first distance is five times that of the second distance.

In another embodiment, the operation surface comprises a holding portion, wherein the holding portion is located on a lateral side of the mouse body, and the sensor is located on the holding portion. The holding portion comprises a recess, and the sensor is disposed in the recess.

Utilizing the embodiment of the invention, when the palm of user is away from the sensor, the mouse circuit automatically deactivates the mouse, such that battery power of the mouse is conserved, and battery power usage of the mouse is extended.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1A is a side view of a mouse of a first embodiment of the invention;

Fig. 1B is a top view of the mouse of the first embodiment of the invention;

Fig. 2 is a block diagram of the mouse of the first embodiment of the invention;

Fig. 3A shows a mouse of a second embodiment of the invention; and

Fig. 3B shows a modified example of the mouse of the second embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

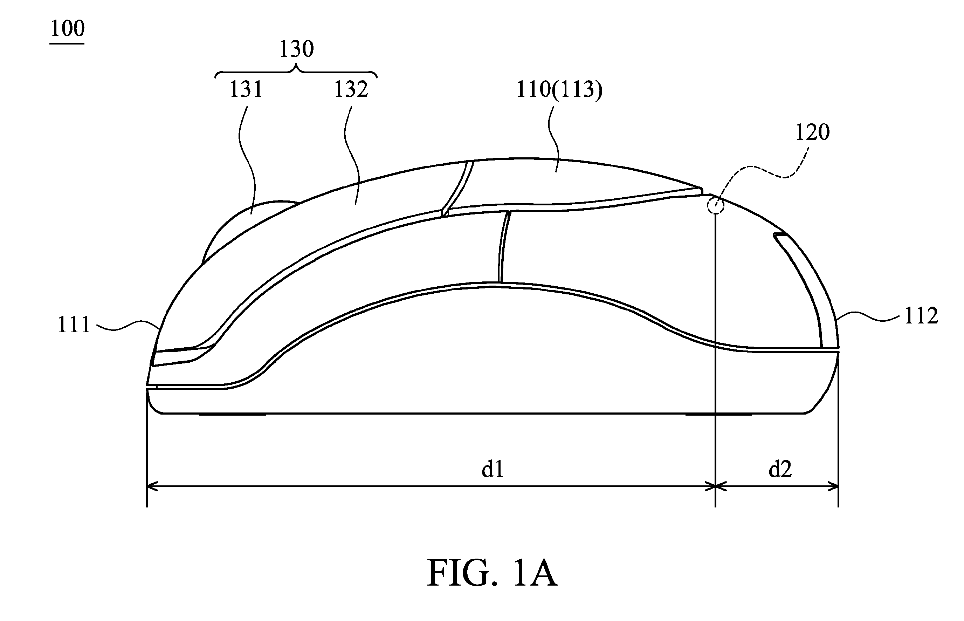

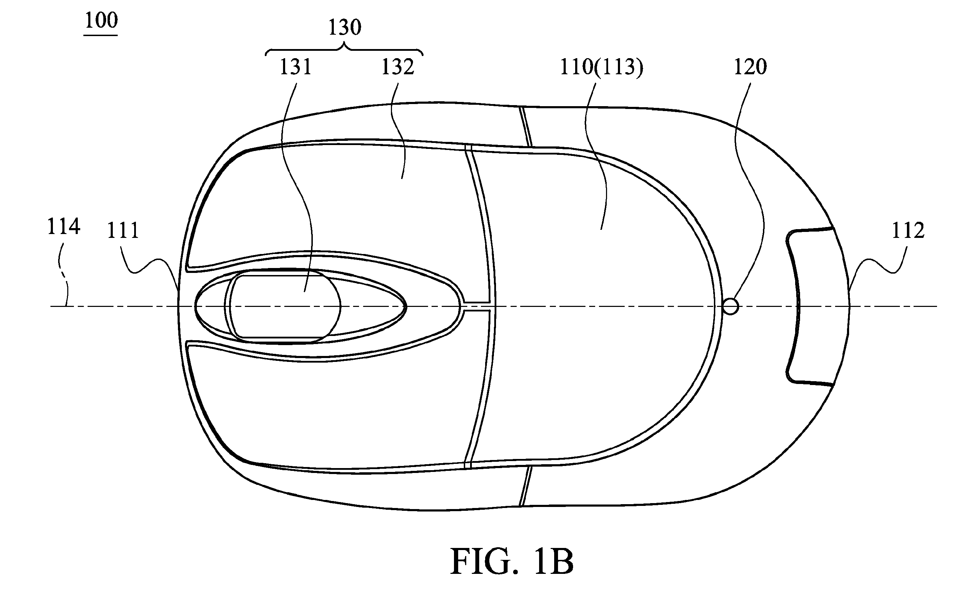

Figs. 1A and 1B show a mouse 100 of a first embodiment of the invention, including a mouse body 110, a sensor 120 and a control interface 130. The mouse body 110 includes a first end 111, a second end 112 and an operation surface 113. The control interface 130 is located on the operation surface 113 adjacent to the first end 111, and the sensor 120 is located on the operation surface 113. The sensor 120 is located between the control interface 130 and the second end 112.

The control interface 130 comprises a mouse wheel 131 and mouse keys 132, the operation surface 113 has a central line 114, the sensor 120 and the mouse wheel 131 are located on the central line 114, a first distance d1 is formed between the sensor 120 and the first end 111, a second distance d2 is formed between the sensor 120 and the second end 112, and the first distance d1 is five times that of the second distance d2.

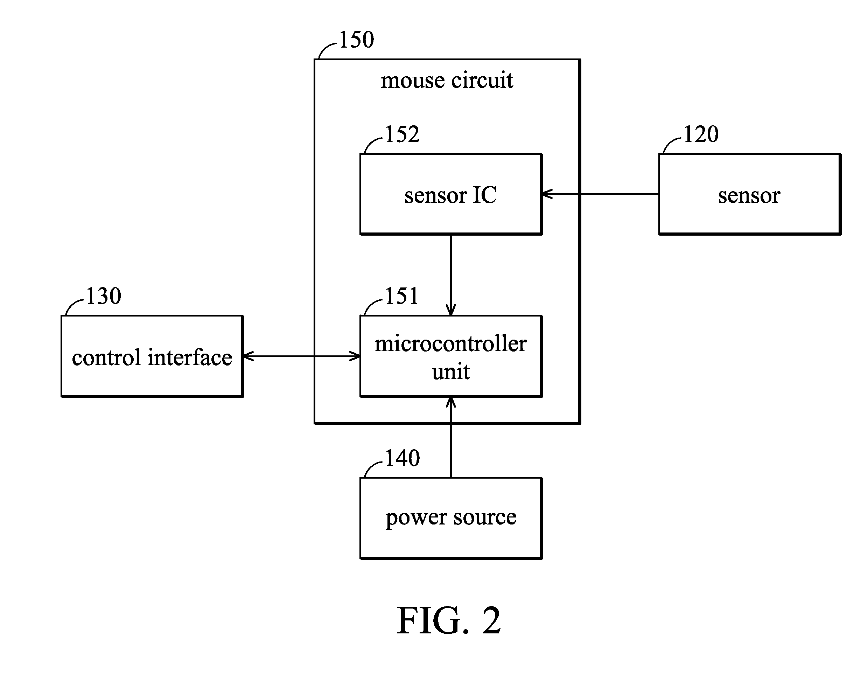

Fig. 2 is a block diagram of the mouse 100 of the first embodiment of the invention, wherein the mouse 100 further comprises a power source 140 and a mouse circuit 150. The sensor 120 sends a switch signal to the mouse circuit 150 according to a distance between the touch medium (for example, palm of user) and the sensor 120. The mouse circuit 150 is electrically connected to the power source 140 and the sensor 120, wherein the mouse circuit 150 activates or deactivates the mouse according to the switch signal.

The mouse circuit 150 comprises a sensor IC 152 and a microcontroller unit 151, wherein the sensor IC 152 is electrically connected to the microcontroller unit 151, the sensor 120 is electrically connected to the sensor IC 152, the microcontroller unit 151 is electrically connected to the power source 140, and the switch signal is received and processed by the sensor IC 152, and sent to the microcontroller unit 151, and the microcontroller unit 151 activates or deactivates the mouse 100 according to the switch signal. The control interface 130 is also electrically connected to the microcontroller unit 151, and the control interface 130 sends a control signal to the microcontroller unit 151.

The sensor 120 can be an optical sensor or other type of sensors. In one embodiment, the sensor 120 detects the distance between the touch medium and the sensor 120. When the distance between the touch medium and the sensor 120 is zero, the mouse circuit 150 activates the mouse, and when the distance between the touch medium and the sensor 120 is greater than zero, the mouse circuit 150 deactivates the mouse.

Utilizing the embodiment of the invention, when the palm of a user is away from the sensor, the mouse circuit automatically deactivates the mouse, such that battery power of the mouse is conserved, and battery power usage of the mouse is extended.

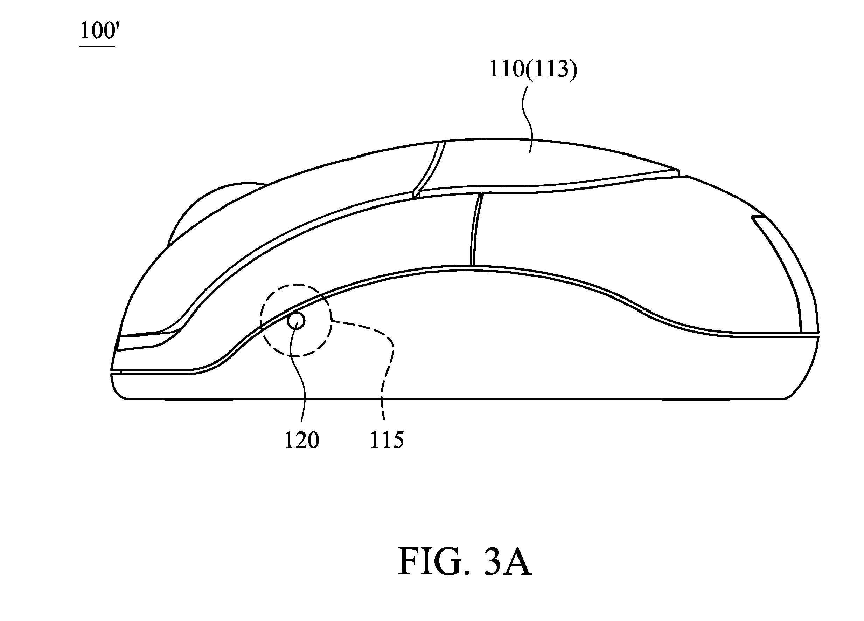

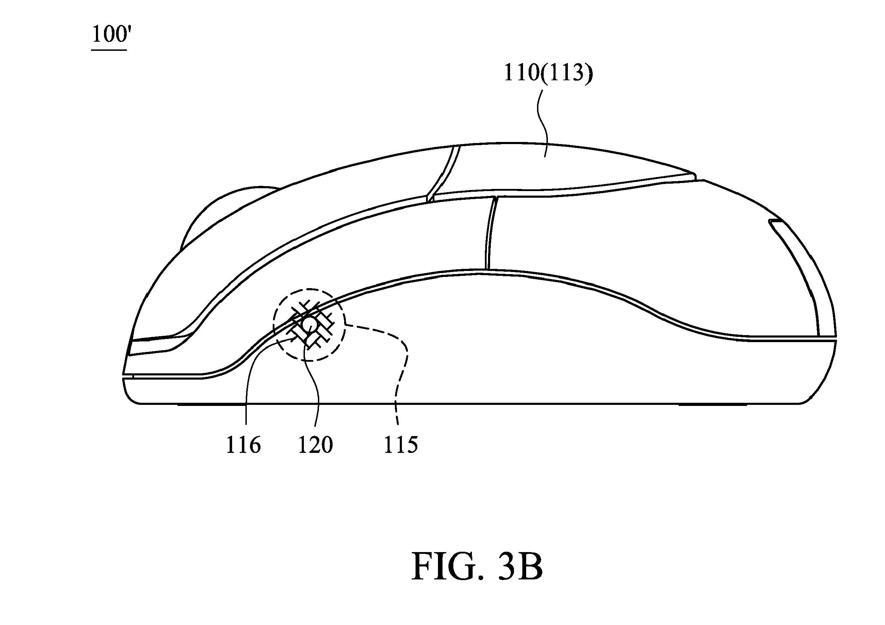

Fig. 3A shows a mouse 100' of a second embodiment of the invention, wherein the operation surface 113 comprises a holding portion 115, the holding portion 115 is located on a lateral side of the mouse body 110, and the sensor 120 is located on the holding portion 115. When a user operates the mouse 100', a thumb of the user contacts the holding portion 115 to control movement of the mouse 100' and contacts the sensor 120 to activate the mouse 100'. In a modified example, the holding portion 115 comprises a recess, and the sensor 120 is disposed in the recess. In another modified example as shown in Fig. 3B, the holding portion 115 comprises a non-slip pattern 116.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A mouse, activated by a touch medium, comprising:
a mouse body;
a sensor, disposed on the body, wherein the sensor sends a switch signal according to a distance between the touch medium and the sensor;
a power source; and
a mouse circuit, electrically connected to the power source and the sensor, wherein the mouse circuit activates or deactivates the mouse according to the switch signal.

2. The mouse as claimed in claim 1, wherein the sensor is an optical sensor.

3. The mouse as claimed in claim 1, wherein the mouse circuit comprises a sensor IC and a microcontroller unit, wherein the sensor IC is electrically connected to the microcontroller unit, the sensor is electrically connected to the sensor IC, and the microcontroller unit is electrically connected to the power source, and the switch signal is received and processed by the sensor IC and then sent to the microcontroller unit, and the microcontroller unit activates or deactivates the mouse according to the switch signal.

4. The mouse as claimed in claim 1, wherein when the distance between the touch medium and the sensor is zero, the mouse circuit activates the mouse, and when the distance between the touch medium and the sensor is greater than zero, the mouse circuit deactivates the mouse.

5. The mouse as claimed in claim 1, wherein the touch medium is a human palm.

6. The mouse as claimed in claim 1, further comprising a control interface, wherein the mouse body comprises an operation surface, a first end and a second end, and the control interface is located on the operation surface adjacent to the first end, and the sensor is located on the operation surface between the control interface and the second end.

7. The mouse as claimed in claim 6, wherein the control interface comprises a mouse wheel, and the operation surface has a central line, wherein the sensor and the mouse wheel are located on the central line, a first distance is formed between the sensor and the first end, a second distance is formed between the sensor and the second end, and the first distance is five times that of the second distance.

8. The mouse as claimed in claim 1, further comprising a control interface, wherein the mouse body comprises an operation surface, a first end and a second end, and the control interface is located on the operation surface adjacent to the first end, wherein the operation surface comprises a holding portion, and the holding portion is located on a lateral side of the mouse body, and the sensor is located on the holding portion.

9. The mouse as claimed in claim 8, wherein the holding portion comprises a recess, and the sensor is disposed in the recess.

10. The mouse as claimed in claim 8, wherein the holding portion comprises a non-slip pattern.
